# FASCICULE DE BREVET EUROPEEN

(11) **EP 3 453 878 B1**
(45) Date de publication et mention de la délivrance du brevet: **08.07.2020**
(21) Numéro de dépôt: 18191577.8
(22) Date de dépôt: 29.08.2018
(51) Int. Cl.: F04B 35/04, F04B 39/12, F04B 39/14, F04C 18/02, H02K 1/18, H02K 5/26, H02K 7/14

(54) **COMPRESSEUR ÉLECTRIQUE POUR VÉHICULE AUTOMOBILE**
ELEKTRISCHER KOMPRESSOR FÜR KRAFTFAHRZEUG
ELECTRIC COMPRESSOR FOR A MOTOR VEHICLE

(30) Priorité: 06.09.2017 FR 1758229
(43) Date de publication de la demande: 13.03.2019
(73) Titulaire: Valeo Japan Co., Ltd., Saitama 360-0193 (JP)
(72) Inventeur: BELLET, Augustin, 78322 LE MESNIL SAINT-DENIS CEDEX (FR); BACHET, Isabelle, 78322 LE MESNIL SAINT DENIS CEDEX (FR)
(74) Mandataire: Tran, Chi-Hai

(56) Documents cités:
- EP-A1- 2 667 030
- EP-A1- 2 927 491
- EP-A2- 2 169 231
- DE-A1-102006 010 374
- DE-A1-102013 219 399
- DE-U1-202016 008 176
- US-A1- 2004 109 772

## Description

La présente invention se rapporte au domaine des compresseurs électriques équipant un véhicule automobile, par exemple pour comprimer et réchauffer un fluide réfrigérant au sein d'un circuit de fluide réfrigérant d'un tel véhicule, notamment pour modifier une température d'un flux d'air préalablement à son admission dans l'habitacle du véhicule.

De manière connue, un tel compresseur électrique comprend un mécanisme de compression entraîné par un moteur électrique. Le compresseur électrique comprend également un module de commande configuré pour convertir l'énergie électrique disponible à bord du véhicule en une énergie électrique adaptée à l'alimentation du moteur électrique du compresseur électrique.

Un tel compresseur électrique comprend, notamment, un carter qui loge le moteur électrique et un mécanisme de compression du fluide réfrigérant. Ce carter, dont la forme générale est sensiblement celle d'un cylindre, comporte typiquement un port d'entrée du fluide réfrigérant dans le compresseur électrique, par lequel le fluide réfrigérant est admis au sein dudit compresseur électrique, ainsi qu'un ensemble d'éléments de fixation du compresseur électrique sur le véhicule. Un tel compresseur électrique comprend également un boîtier électrique qui loge le module de commande. Le boîtier électrique comprend notamment au moins un élément de connexion électrique par lequel le compresseur électrique est raccordé électriquement à un ensemble d'alimentation et de pilotage du circuit de fluide réfrigérant dans le véhicule. Le boîtier électrique et le carter du compresseur électrique sont fixés ensemble, par exemple par un ensemble de vis et/ou de boulons.

De manière connue, le moteur électrique d'un tel compresseur électrique comprend un rotor en rotation autour d'un axe de rotation et un stator comprenant des bobines électriques enroulées autour d'un noyau. Le moteur électrique, le mécanisme de compression et le module de commande sont, de manière connue, alignés suivant un axe longitudinal du compresseur électrique, sensiblement confondu avec l'axe de rotation du rotor du moteur électrique. Plus précisément, le moteur électrique est situé, selon la direction de cet axe longitudinal, dans une position axialement intermédiaire entre le mécanisme de compression et le module de commande.

Au regard de cet axe longitudinal, les éléments de fixation du compresseur électrique sur le véhicule ainsi que, notamment, l'élément de connexion électrique, sont agencés sensiblement radialement, c'est-à-dire qu'ils forment une saillie par rapport à une enveloppe sensiblement cylindrique dans laquelle s'inscrivent le carter et le boîtier électrique du compresseur électrique. Consécutivement, l'implantation et la configuration angulaire de ces différents éléments sur le compresseur électrique ont une influence directe sur les possibilités d'implantation d'un tel compresseur électrique sur le véhicule. En d'autres termes, la configuration angulaire du boîtier électrique lorsqu'il est fixé sur le carter par rapport à l'axe longitudinal du compresseur électrique est à l'origine d'un encombrement particulier du compresseur électrique qui conditionne son implantation future sur le véhicule, en fonction des architectures moteurs considérées par exemple.

On connaît par la demande de brevet US2004109772 un compresseur électrique avec un boîtier d'onduleur fixé à l'extérieur sur une paroi d'extrémité du boîtier dans une direction axiale sur le côté d'un orifice d'aspiration.

La demande de brevet DE102006010374 décrit un appareil de mesure de masse d'air.

La présente invention a pour objet de répondre au moins en grande partie aux problèmes précédents et de conduire en outre à d'autres avantages en proposant un nouveau compresseur électrique le rendant plus polyvalent afin de pouvoir utiliser un même compresseur électrique pour différents types de véhicules dans lesquels les contraintes d'encombrement et d'implantation imposent différents agencements relatifs du boîtier électrique et du carter d'un tel compresseur électrique.

Selon un premier aspect de l'invention, on atteint au moins l'un des objectifs précités avec un compresseur électrique selon la revendication 1.

Les moyens de fixation du boitier électrique avec le carter du compresseur électrique conforme au premier aspect de l'invention permettent d'établir au moins deux configurations angulaires différentes d'assemblage du boitier électrique sur le carter et par rapport à un axe longitudinal du compresseur électrique.

L'axe longitudinal du compresseur électrique correspond avantageusement à l'axe de rotation du rotor du moteur électrique d'un tel compresseur électrique et/ou à l'axe de rotation du mécanisme de compression et/ou l'axe de rotation du moteur électrique. De manière avantageuse, l'axe de rotation du rotor du moteur électrique du compresseur électrique et l'axe de rotation du mécanisme de compression sont confondus.

De manière spécifique, les moyens de fixation du compresseur électrique conforme au premier aspect de l'invention permettent de définir plusieurs configurations angulaires de fixation du boitier électrique sur le carter. Un angle - dit angle d'orientation - suivant lequel les configurations angulaires sont décalées entre elles, est donc à comprendre par rapport à l'axe longitudinal du compresseur électrique. En d'autres termes, l'angle d'orientation caractérisant l'angle entre deux configurations angulaires directement adjacentes est mesuré dans un plan perpendiculaire à cet axe longitudinal.

Comme il sera décrit dans les paragraphes suivants, l'invention conforme à son premier aspect vise à définir plusieurs configurations angulaires du boitier électrique sur le carter, afin de permettre plusieurs configurations d'assemblage du compresseur électrique. Il en résulte qu'avec une architecture commune, plusieurs configurations de compresseur électrique peuvent être réalisés, répondant ainsi aux objectifs de polyvalence et de réduction des coûts de fabrication de tels compresseurs électriques.

Le compresseur électrique conforme au premier aspect de l'invention peut comprendre avantageusement au moins un des perfectionnements ci-dessous, les caractéristiques techniques formant ces perfectionnements pouvant être prises seules ou en combinaison :
- les moyens de fixation du boîtier électrique avec le carter du compresseur électrique comprennent, pour chaque configuration angulaire du boîtier électrique sur le carter, au moins un ensemble formé par des pions de centrage configurés pour s'engager dans des orifices d'accueil complémentaires du compresseur électrique conforme au premier aspect de l'invention. Les pions de centrage permettent ainsi de définir, dans le plan perpendiculaire à l'axe longitudinal du compresseur électrique, la position relative du boitier électrique par rapport au carter et par rapport à l'axe longitudinal, pour une configuration angulaire donnée. Les pions de centrage permettent de définir une seule position relative par configuration angulaire. À cet effet, les dimensions latérales des pions de centrages sont légèrement inférieures aux dimensions latérales des orifices d'accueil correspondants, afin de pouvoir être insérés avec ou sans jeu, éventuellement en force, dans lesdits orifices d'accueil correspondants ;
- les moyens de fixation comprennent au moins deux pions de centrage et au moins trois orifices d'accueil. Ainsi, par l'engagement des deux pions de centrage dans deux des trois orifices d'accueil différemment choisis, il est possible de définir différentes configurations angulaires du boîtier électrique sur le carter du compresseur électrique conforme au premier aspect de l'invention ;
- les pions de centrage sont logés dans une première couronne périphérique du compresseur électrique conforme au premier aspect de l'invention et les orifices d'accueil desdits pions de centrage sont avantageusement formés dans une deuxième couronne périphérique du compresseur électrique selon l'invention, la première et la deuxième couronne périphériques étant destinées être mise en appui l'une contre l'autre, suivant la direction longitudinale, lorsque le boîtier électrique et le carter sont assemblés pour former le compresseur électrique conforme au premier aspect de l'invention. Plus précisément, le boîtier électrique et le carter du compresseur électrique conforme au premier aspect de l'invention se présentent avantageusement chacun sous la forme générale d'un cylindre - éventuellement fermé à l'une de ses extrémités longitudinales

- et dont l'intérieur desdits cylindres est occupé par le ou les éléments qu'ils logent (respectivement, le moteur électrique et le mécanisme de compression pour le carter, et le module de commande pour le boîtier électrique). La première couronne périphérique et la deuxième couronne périphérique précédemment définies sont avantageusement agencées aux extrémités ouvertes de ces formes générales cylindriques, où elles constituent chacune un anneau dont une courbe directrice est comprise dans le plan perpendiculaire à l'axe longitudinal précédemment défini et dont une génératrice est parallèle à l'axe longitudinal. Lors de l'assemblage du boîtier électrique avec le carter pour former le compresseur électrique conforme au premier aspect de l'invention, la première couronne périphérique et la deuxième couronne périphérique sont accolées ensemble par leur surface annulaire ;
- selon une première variante de réalisation, les pions de centrage sont logés dans la couronne périphérique du boîtier électrique, les orifices d'accueil étant formés dans la couronne périphérique du carter du compresseur électrique conforme au premier aspect de l'invention. Selon une deuxième variante de réalisation, les pions de centrage sont logés dans la couronne périphérique du carter, les orifices d'accueil étant formés dans la couronne périphérique du boîtier électrique du compresseur électrique conforme au premier aspect de l'invention ;
- les orifices d'accueil sont angulairement régulièrement répartis sur la couronne périphérique dans laquelle ils sont formés et par rapport à l'axe longitudinal ;
- les moyens de fixation comprennent (i) un premier ensemble formé par les pions de centrage et deux orifices d'accueil, ledit premier ensemble permettant de fixer le boîtier électrique sur le carter selon une première configuration angulaire, et (ii) un deuxième ensemble formé par les pions de centrage et deux orifices d'accueil, ledit deuxième ensemble permettant de fixer le boîtier électrique sur le carter selon une deuxième configuration angulaire, un angle entre les orifices d'accueil du deuxième ensemble

étant égal à un angle entre les orifices d'accueil du premier ensemble, pris par rapport à l'axe longitudinal ;
- selon une variante particulièrement avantageuse, l'invention conforme à son premier aspect prévoit qu'un angle d'orientation séparant les orifices d'accueil du premier ensemble des orifices d'accueil du deuxième ensemble est sensiblement égal à 120 degrés. Selon cette variante de réalisation, non exclusive, il est ainsi possible de réaliser deux configurations angulaires différentes de la fixation du boîtier électrique sur le carter du compresseur électrique conforme au premier aspect de l'invention, chaque configuration étant orientée à 120° par rapport à l'autre et suivant l'axe longitudinal. Dans cette variante de réalisation préférée, l'angle d'orientation séparant les deux ensembles des moyens de fixation - formant chacun une configuration angulaire du compresseur électrique - est égal à 120° ;
- d'une manière plus générale, l'invention peut prévoir un plus grand nombre de configurations angulaires pour la fixation du boîtier électrique sur le carter du compresseur électrique conforme au premier aspect de l'invention. En particulier, les configurations angulaires peuvent être séparées deux à deux par une même valeur de l'angle d'orientation, ou par plusieurs valeurs - éventuellement toutes différentes -de l'angle d'orientations. En d'autres termes, deux configurations angulaires directement adjacentes, c'est-à-dire deux ensembles directement adjacents de moyens de fixation, chaque ensemble formant une configuration angulaire particulière du boitier électrique sur le carter, peuvent être séparées d'une valeur constante ou variable de l'angle d'orientation. Lorsque l'angle d'orientation est constant, l'invention permet alors de réaliser au plus un nombre de configurations angulaires égale au rapport de 180 degrés par la valeur de l'angle de rotation. En d'autres termes, les moyens de fixation comprennent un nombre N d'ensembles, chaque ensemble étant formé par les pions de centrage et deux orifices d'accueil, chaque ensemble permettant de fixer le boîtier électrique sur le carter selon une configuration angulaire spécifique, l'angle d'orientation entre deux ensembles formant des configurations angulairement adjacentes étant étal au ratio de 180 degrés par N.

Quelle que soit la variante de réalisation choisie, l'invention conforme à son premier aspect permet de définir plusieurs configurations angulaires distinctes pour la fixation du boîtier électrique sur le carter d'un compresseur électrique du type de ceux utilisés dans les circuits de fluide réfrigérant des véhicules automobiles. L'invention permet ainsi d'étendre de manière simple les possibilités d'implantation d'un tel compresseur électrique au sein du véhicule : elle apporte donc à la fois une souplesse supplémentaire dans la conception du véhicule, et elle permet d'utiliser un même compresseur électrique dans différents véhicules, réduisant ainsi les coûts de conception et de fabrication.

Selon un deuxième aspect de l'invention, il est proposé un véhicule automobile comprenant un circuit de fluide réfrigérant, dans lequel ledit fluide réfrigérant est comprimé et chauffé au moyen d'un compresseur électrique conforme au premier aspect de l'invention ou selon l'un quelconque de ses perfectionnements.

De manière avantageuse, mais non exclusive, l'invention conforme à son premier aspect trouve des applications privilégiées dans des véhicules de type électrique ou hybrides.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 est une vue schématique en perspective d'un exemple de réalisation d'un compresseur électrique conforme au premier aspect de l'invention ;
- la FIGURE 2 est une vue schématique en perspective éclatée d'un compresseur électrique tel qu'illustré par la FIGURE 1 ;
- la FIGURE 3 est une vue schématique - dans un plan perpendiculaire à l'axe longitudinal - d'une première configuration angulaire de la fixation du boîtier électrique sur le carter d'un compresseur électrique conforme au premier aspect de l'invention ;
- la FIGURE 4 est une vue schématique de - dans un plan perpendiculaire à l'axe longitudinal - d'une deuxième configuration angulaire de la fixation du boîtier électrique sur le carter d'un compresseur électrique conforme au premier aspect de l'invention ;
- la FIGURE 5 est une vue schématique dans un plan perpendiculaire à l'axe longitudinal du boîtier électrique d'un compresseur électrique tel qu'illustré par la FIGURE 1 ;
- la FIGURE 6 est une vue schématique dans un plan perpendiculaire à l'axe longitudinal du carter d'un compresseur électrique tel qu'illustré par la FIGURE 1.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

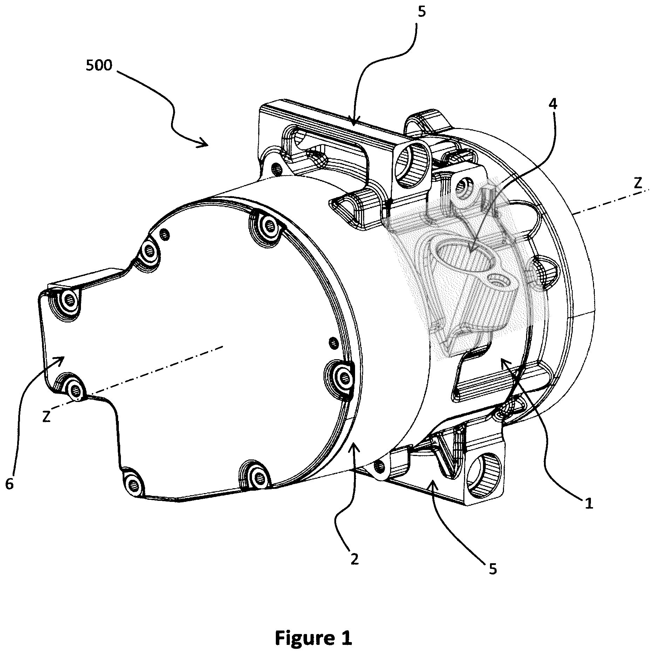

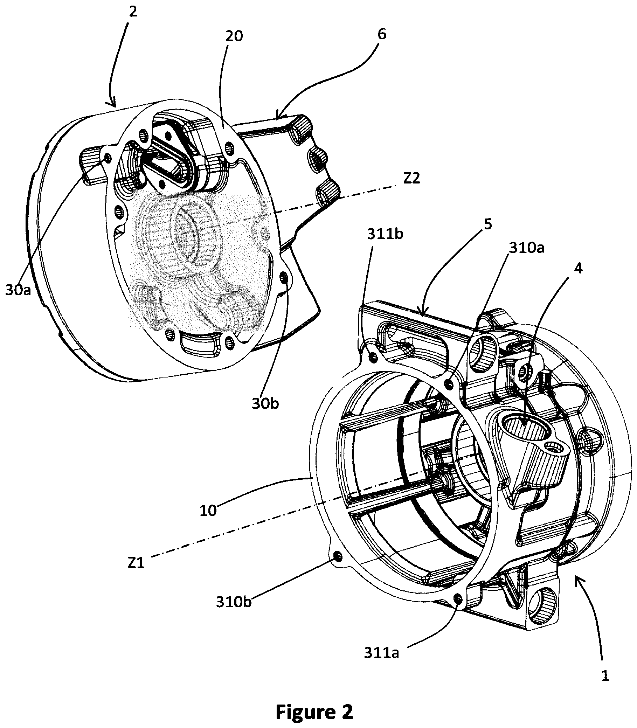

Les FIGURES 1 et 2 illustrent un compresseur électrique 500 conforme au premier aspect de l'invention et destiné à un circuit de fluide réfrigérant d'un véhicule automobile. Le compresseur électrique 500 comporte un carter 1 dans lequel sont logés un moteur électrique et un mécanisme de compression alimenté par le moteur électrique, non représentés sur les figures. Le compresseur électrique 500 comporte également un boîtier électrique 2 qui loge un module de commande du moteur électrique actionnant le mécanisme de compression. Le module de commande n'est pas représenté sur les figures.

La FIGURE 1 est une vue du compresseur électrique 500 dans laquelle le carter 1 et le boîtier électrique 2 sont assemblés ; tandis que la FIGURE 2 est une vue éclatée du compresseur électrique 500.

En référence aux FIGURES 1 et 2, le carter 1 et le boîtier électrique 2 se présentent respectivement sous une forme générale de cylindres alignés et assemblés selon leurs axes d'élongation respectifs pour former le compresseur électrique 500. Plus précisément, le carter 1 prend la forme générale d'un cylindre d'axe Z1. Le carter 1 est fermé à l'une de ses extrémités et il comporte, à son extrémité ouverte, opposée à son extrémité fermée, une couronne périphérique 10 sensiblement plane et perpendiculaire à l'axe Z1 précité.

Le boîtier électrique 2 prend la forme générale d'un cylindre d'axe Z2 fermé à l'une de ses extrémités et il comporte, à son extrémité ouverte, opposée à son extrémité fermée, une couronne périphérique 20 sensiblement plane et perpendiculaire à l'axe Z2 précité.

Les diamètres des couronnes périphériques 10, 20 du carter 1 et du boitier électrique 2 sont préférentiellement identiques, chaque couronne périphérique 10, 20 formant une surface d'épaulement pour l'assemblage et la fixation du carter 1 et du boitier électrique 2. Pour former le compresseur électrique 500, le carter 1 et le boîtier électrique sont alignés selon leurs axes respectifs Z1, Z2 et leurs couronnes périphériques 10, 20, sont mises en appui et fixées ensemble par des moyens de fixation 3.

Il faut comprendre ici que la qualité de l'état de surface des couronnes périphériques 10, 20, respectivement du carter 1 et du boîtier électrique 2, ainsi que la précision de la géométrie desdites couronnes périphériques conditionnent la qualité de l'étanchéité du compresseur électrique 500 vis-à-vis de l'extérieur : en particulier, les dimensions relatives des couronnes périphériques 10, 20, leur planéité et/ou leur perpendicularité respective par rapport aux axes Z1, Z2, du carter 1 et du boîtier électrique 2 sont donc à entendre dans ce qui suit en prenant en compte cette étanchéité.

Lorsque le carter 1 et le boîtier électrique 2 sont assemblés et fixés l'uns à l'autre pour former le compresseur électrique 500, leurs axes respectifs Z1, Z2, sont sensiblement confondus et forment l'axe longitudinal Z du compresseur 500. Avantageusement, au sein du compresseur 500, le moteur électrique, le mécanisme de compression et le module de commande sont alignés selon cet axe longitudinal Z de telle manière que le moteur électrique se trouve, selon la direction de l'axe longitudinal Z, entre le mécanisme de compression et le module de commande.

En référence aux différentes figures, le carter 1 du compresseur électrique 500 comporte également un port 4 d'entrée de fluide réfrigérant, par lequel ce dernier est admis au sein du compresseur électrique 500, dans le carter 1, afin d'être comprimé par le mécanisme de compression. Le port 4 d'entrée de fluide réfrigérant est avantageusement agencé de manière sensiblement tangente par rapport à une enveloppe globalement cylindrique du carter 1.

Le carter 1 comprend aussi des moyens 5 de fixation du compresseur électrique 500 sur le véhicule, lesdits moyens de fixation 5 du compresseur électrique 500 sur le véhicule étant situés en périphérie dudit carter 1. Plus particulièrement, les moyens 5 de fixation du compresseur électrique 500 sur le véhicule forment des extensions sensiblement radiales par rapport à l'enveloppe globalement cylindrique du carter 1. Dans l'exemple de réalisation plus particulièrement illustré sur les figures, les moyens 5 de fixation du compresseur électrique 500 au véhicule sont formés par deux poignées cylindriques disposées sensiblement à l'opposé l'une de l'autre par rapport à un diamètre de la forme générale cylindrique du carter 1 pris dans le plan perpendiculaire à l'axe longitudinal Z.

Le boîtier électrique 2 comporte une extension sensiblement radiale 6 configurée pour recevoir un connecteur électrique de liaison du module de commande du compresseur électrique 500 à un ensemble d'alimentation et de contrôle du circuit réfrigérant dans lequel le compresseur électrique 500 est inclus. L'extension 6 prend une forme polygonale s'étendant en saillie par rapport à une forme globalement circulaire du boitier électrique 2 pris dans le plan perpendiculaire à l'axe Z2.

Il résulte de ce qui précède que le port d'entrée 4, les moyens 5 de fixation du compresseur électrique 500 au véhicule et l'extension 6 de connexion électrique forment autant d'éléments dont les agencements angulaires relatifs par rapport à l'axe longitudinal Z du compresseur électrique 500 sont à prendre en compte lors de l'implantation dudit compresseur électrique 500 dans le circuit de fluide réfrigérant et dans le véhicule, En d'autres termes, la configuration angulaire relative du boîtier électrique 2 et du carter 1 dans le compresseur électrique 500, par rapport à l'axe longitudinal Z de ce dernier, peut faciliter ou, à l'inverse, rendre plus complexe, l'implantation du compresseur électrique 500 dans le circuit de fluide réfrigérant et dans le véhicule.

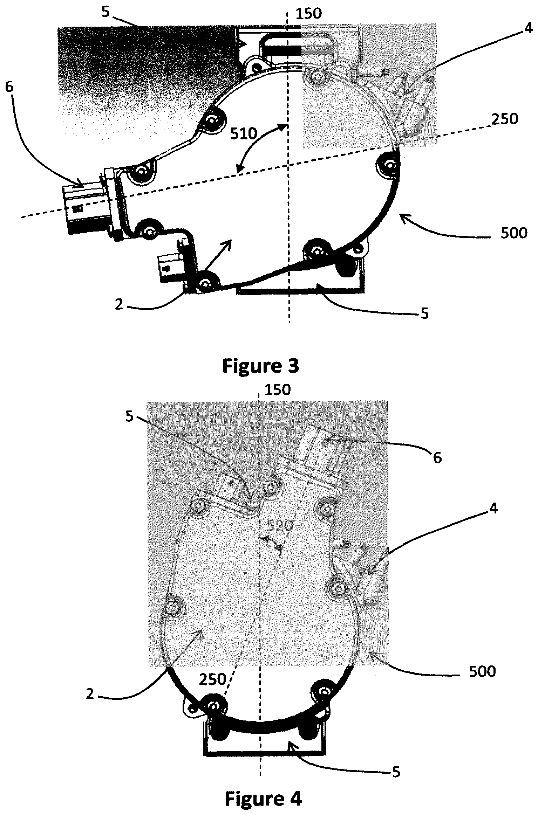

La FIGURE 1 et la FIGURE 3 illustrent un premier exemple de configuration angulaire du boîtier électrique 2 et du carter 1, dans lequel un diamètre 150 du carter 1 selon lequel sont disposées, sensiblement à l'opposé l'une de l'autre, les poignées 5 de fixation du compresseur électrique 500 sur le véhicule forme, avec un rayon 250 du boîtier électrique 2 selon lequel s'étend l'extension radiale 6 de connexion électrique du compresseur électrique 500, un angle 510 compris entre 90° et 150 degrés, l'angle 510 étant compté positivement dans le sens trigonométrique et à partir de la poignée 5 située vers le haut sur la FIGURE 3. Cette configuration relative est, notamment, celle d'un compresseur électrique destiné à un véhicule de type hybride, c'est-à-dire un véhicule dont la propulsion peut être assurée par des moyens à combustion et/ou par des moyens électriques. Une telle configuration est connue notamment sous l'acronyme anglo-saxon PHEV (« Plug-in Hybrid Electric Vehicle », acronyme anglais pour Véhicule Hybride Rechargeable).

La FIGURE 4 illustre un deuxième exemple de configuration angulaire du boîtier électrique 2 et du carter 1, dans lequel le diamètre 150 du carter 1 selon lequel sont disposées, sensiblement à l'opposé l'une de l'autre, les poignées 5 de fixation du compresseur électrique 500 sur le véhicule forme, avec le rayon 250 du boîtier électrique 2 selon lequel s'étend l'extension radiale 6 de connexion électrique du compresseur électrique 500, un angle 520 compris entre -40° et 0°, l'angle 520 étant compté positivement dans le sens trigonométrique et à partir de la poignée 5 située vers le haut sur la FIGURE 4. Dans ce deuxième exemple de réalisation, on peut considérer que l'extension radiale 6 de connexion électrique est sensiblement radialement alignée avec l'une des poignées 5 de fixation du compresseur électrique 500 sur le véhicule. D'une manière plus générale, l'angle 520 de la deuxième configuration angulaire illustrée sur la FIGURE 4 est nettement inférieur à celui de la première configuration angulaire illustrée sur la FIGURE 3. De manière préférentielle, l'angle formé par les deux configurations illustrées sur les FIGURES 3 et 4 est compris entre 90° et 190° ; et il est préférentiellement sensiblement égal à 120°.

Le deuxième exemple de réalisation illustré sur la FIGURE 4 Cette configuration correspond notamment à celle d'un compresseur électrique 500 destiné à un véhicule de type entièrement électrique, c'est-à-dire un véhicule dont la propulsion est uniquement assurée par des moyens électriques.

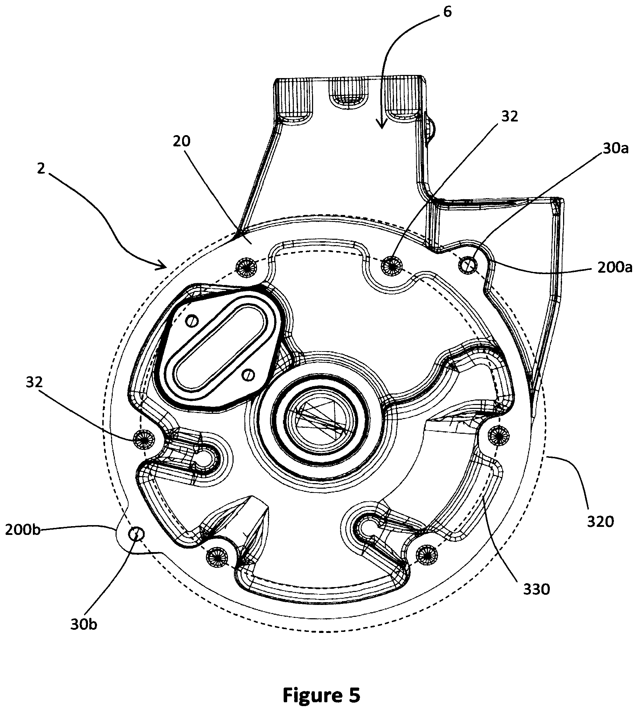

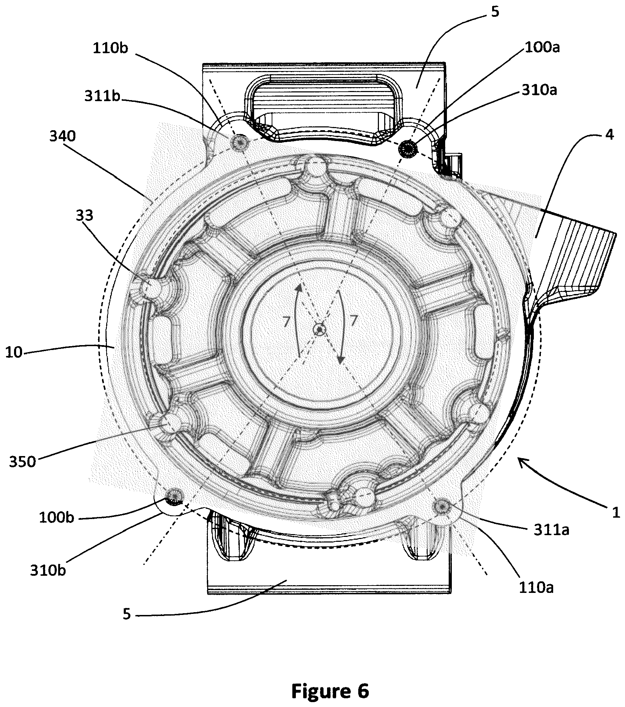

Pour permettre ces différentes configurations angulaires autour de l'axe longitudinal Z du compresseur électrique 500 conforme au premier aspect de l'invention, l'invention prévoit que les moyens 3 de fixation du carter 1 et du boîtier électrique 2 permettent la réalisation de différentes configurations relatives angulairement décalées entre elles par rapport à l'axe longitudinal Z du compresseur électrique 500, tels que décrits dans les paragraphes suivants en référence aux FIGURES 5 et 6.

Les FIGURES 5 et 6 illustrent des vues de face, du côté de leurs couronnes périphériques respectives 20, 10, respectivement du boîtier électrique 2 et du carter 1 d'un compresseur électrique 500 selon l'invention.

Ces figures illustrent un exemple de réalisation, non limitatif, dans lequel les moyens 3 de fixation du carter 1 avec le boîtier électrique 2 permettent l'obtention de deux configurations angulaires distinctes.

Selon cet exemple de réalisation, les moyens 3 de fixation du carter 1 avec le boîtier électrique 2 comprennent :
- un premier ensemble formé par les pions de centrage 30a, 30b logés sur la couronne périphérique 20 du boîtier électrique 2, et deux orifices d'accueil 310a, 310b formés sur la couronne périphérique 10 du carter 1, ledit premier ensemble permettant de fixer le boîtier électrique 2 sur le carter 1 selon une première configuration angulaire ; et
- un deuxième ensemble formé par les pions de centrage 30a, 30b logés sur la couronne périphérique 20 du boîtier électrique 2, et deux orifices d'accueil 311a, 311 b formés sur la couronne périphérique 10 du carter 1, ledit deuxième ensemble permettant de fixer le boîtier électrique 2 sur le carter 1 selon une deuxième configuration angulaire.

Éventuellement, les pions de centrage 30a, 30b peuvent être logés sur la couronne périphérique 10 du carter 1 et les orifices d'accueil 310a, 310b, 311a, 311b, de chaque premier et deuxième ensemble peuvent être formés sur la couronne périphérique 20 du boîtier électrique 2 sans que cela nuise à l'invention.

Comme visible sur les FIGURES 5 et 6, les pions de centrage 30a, 30b sont logés chacun dans une excroissance radiale 200a, 200b, de la couronne périphérique 20. En d'autres termes, les pions de centrage 30a, 30b sont chacun agencé dans une « oreille » 200a, 200b, radialement saillante vers l'extérieur de la couronne périphérique 20 par rapport à l'axe longitudinal Z, c'est-à-dire à l'opposé du volume intérieur du boîtier électrique 2 qui loge le module de commande du compresseur électrique 500. Avantageusement, les centres des pions de centrage sont répartis sur un cercle 320 centré sur l'axe longitudinal Z du compresseur électrique 500.

Comme le montre plus particulièrement la FIGURE 5, les pions de centrage 30a, 30b ne sont pas diamétralement opposés sur la couronne périphérique dans laquelle ils sont logés, ici la couronne périphérique 20 du boîtier électrique 2. Ceci permet de réaliser un détrompage supplémentaire lors de l'assemblage du boîtier électrique 2 avec le carter 1. Un angle entre les pions de centrages 30a, 30b est compris entre 170° et 190°.

Un angle entre les orifices d'accueil 311a, 311b du deuxième ensemble est avantageusement égal à un angle entre les orifices d'accueil 310a, 310b du premier ensemble, pris par rapport à l'axe longitudinal Z. Afin de permettre le montage du boitier électrique 2 sur le carter 1 dans n'importe laquelle des configurations prédéfinies par les ensembles décrits précédemment, l'angle entre les pions de centrage 30a, 30b est égal à l'angle entre les orifices d'accueil 310a, 310b, 311a, 311b de n'importe lequel desdits ensembles.

La couronne périphérique 20 comporte également un ensemble d'orifices de fixation 32 destinés à accueillir des tiges filetées (non représentées) permettant de fixer solidairement les le boitier électrique 2 et le carter 1. Selon l'exemple de réalisation plus particulièrement illustré sur la FIGURE 5, six orifices de fixation 32 sont formés dans la couronne périphérique 20. Avantageusement, les centre des orifices de fixation 32 sont angulairement régulièrement répartis sur un cercle 330 centré sur l'axe longitudinal Z du compresseur électrique 500 et dont le diamètre est inférieur au diamètre du cercle 320 sur lequel sont agencés les centres des pions de centrage 30a, 30b. En d'autres termes, les orifices de fixation 32 sont radialement plus proches de l'axe longitudinal Z du compresseur électrique 500 selon l'invention que ne le sont les pions de centrage 30a, 30b.

En référence à la FIGURE 6, les orifices d'accueil 310a, 310b, 311a, 311b, sont formés chacun dans une excroissance radiale de la couronne périphérique 10 du carter 1. En d'autres termes, les orifices d'accueil 310a, 310b, 311a, 311b, sont chacun formés dans une « oreille », respectivement 100a, 100b, 110a, 110b, radialement saillante de la couronne périphérique 10 par rapport à l'axe longitudinal Z. Avantageusement, les centres des orifices d'accueil 310a, 310b, 311a, 311b sont répartis sur un cercle 340 centré sur l'axe longitudinal Z du compresseur électrique 500 et de même diamètre que le cercle 320 précédemment défini comme étant celui sur lequel sont agencés les centres des pions de centrage 30a, 30b sur le boitier électrique 2. Le carter 1 comporte également un ensemble d'orifices de fixation 33 destinés à accueillir des boulons de fixation (non représentés sur les figures) du boîtier électrique 2 avec le carter 1. Avantageusement, les centre des orifices de fixation 33 sont régulièrement répartis sur un cercle 350 centré sur l'axe longitudinal Z du compresseur électrique 500 et dont le diamètre est inférieur au diamètre du cercle 340 sur lequel sont agencés les centres des orifices d'accueil 310a, 310b, 311a, 311b. Plus précisément, le diamètre du cercle 350 précité est avantageusement égal au diamètre du cercle 330 précédemment défini.

Comme le montre plus particulièrement la FIGURE 6, les orifices d'accueil 310a, 310b du premier ensemble et les orifices d'accueil 311a, 311b du deuxième ensemble sont angulairement décalés les uns par rapport aux autres d'un angle 7 dit d'orientation. L'angle d'orientation 7 est mesuré dans le plan de la couronne périphérique dans laquelle sont agencés les différents orifices d'accueil, c'est-à-dire dans un plan perpendiculaire à l'axe longitudinal Z du compresseur électrique 500 selon l'invention. Consécutivement, l'écart angulaire entre le premier orifice d'accueil 310a du premier ensemble des orifices d'accueil précité et le premier orifice d'accueil 311a du deuxième ensemble des orifices d'accueil précité est égal à l'angle d'orientation 7 ; et l'écart angulaire entre le deuxième orifice d'accueil 310b du premier ensemble des orifices d'accueil et le deuxième orifice d'accueil 311b du deuxième ensemble des orifices d'accueil est égal à l'angle d'orientation 7.

Selon l'exemple de réalisation plus particulièrement illustré par les figures, non exclusif, l'angle d'orientation 7 est mesuré selon le sens horaire, comme le montrent les flèches de direction de l'angle d'orientation 7 sur la FIGURE 6. Selon cet exemple particulier de réalisation, l'angle d'orientation 7 est sensiblement égal à 120 degrés. D'une manière plus générale, l'angle d'orientation 7 est égal au rapport entre 180° et le nombre de configurations angulaires prévues par les ensembles d'orifices d'accueil.

Avantageusement, l'écart angulaire entre les pions de centrage 30a, 30b, mesuré dans le plan de la couronne périphérique 20 du boîtier électrique 2, c'est-à-dire perpendiculairement à l'axe longitudinal Z du compresseur électrique 500, est égal, aux tolérances mécaniques de fabrication près, à l'écart angulaire, mesuré dans le plan de la couronne périphérique 10 du carter 1, entre deux orifices d'accueil 310a, 310b ou 311a, 311b, d'un même ensemble d'orifices d'accueil.

Ainsi, lors de l'assemblage du carter 1 avec le boîtier électrique 2, l'engagement des pions de centrage 30a, 30b dans l'un ou l'autre du premier ou du deuxième ensemble des orifices d'accueil 310a, 310b ou 311a, 311b, permet de définir deux configurations angulaires distinctes pour la fixation du carter 1 sur boîtier électrique 2. Plus précisément, selon l'exemple particulier de réalisation, non exclusif, illustré par les figures, lorsque les pions de centrage 30a, 30b sont respectivement engagés dans les orifices d'accueil 310a, 310b, du premier ensemble précédemment défini, la configuration angulaire d'assemblage du carter 1 et du boîtier électrique 2 est similaire à celle illustrée par les FIGURES 1 et 3 ; et lorsque les pions de centrage 30a, 30b sont respectivement engagés dans les orifices d'accueil 311a, 311b, du deuxième ensemble précédemment défini, la configuration angulaire d'assemblage du carter 1 et du boîtier électrique 2 est similaire à celle illustrée par la FIGURE 4.

Grâce à l'invention, il est ainsi possible d'utiliser un même compresseur électrique 500 dans deux types de véhicules pour lesquels les contraintes d'implantation de ce compresseur électrique 500 sont différentes.

Il est à noter que la valeur de 120 degrés de l'angle d'orientation 7 correspond ici à l'écart angulaire entre les configurations relatives illustrées notamment respectivement par les FIGURES 3 et 4. Comme le montre plus précisément la FIGURE 4, et quelle que soit la configuration angulaire choisie pour l'assemblage du boîtier électrique 2 sur le carter 1, la valeur de l'angle d'orientation 7 permet que les « oreilles » radialement saillantes dans lesquelles sont agencés les pions de centrage et orifices d'accueil ne constituent pas des parties saillantes du compresseur électrique 500 selon des directions radiales autres que celles déjà occupées par, notamment, le port 4 d'entrée de fluide réfrigérant, les poignées 5 de fixation sur le véhicule et l'extension radiale 6 de connexion électrique. L'encombrement radial global du compresseur électrique 500 ne se trouve donc pas notablement modifié par l'invention. En d'autres termes, les « oreilles » radialement saillantes dans lesquelles sont agencés les pions de centrage et orifices d'accueil sont formées dans des zones qui n'impactent pas de manière notable l'encombrement global du compresseur électrique 500 conforme au premier aspect de l'invention.

L'invention permet donc, par des moyens simples et peu coûteux, d'étendre les possibilités d'utilisation d'un compresseur électrique 500 dans divers véhicules présentant différentes contraintes d'implantation du circuit de fluide réfrigérant dans lequel ce compresseur électrique est inclus et/ou différentes formes d'architectures moteur.

L'invention décrite ci-dessus ne saurait toutefois se réduire aux moyens et configurations décrits et illustrés, et elle s'applique également à tous moyens ou configurations équivalentes et à toute combinaison de tels moyens. En particulier, si l'invention a été décrite et illustrée ici selon des exemples de réalisation dans lesquels les moyens 3 de fixation du carter 1 avec le boîtier électrique 2 comportent deux pions de centrage 30a, 30b, et deux ensembles comprenant chacun deux orifices d'accueil 310a, 310b, 311a, 311b, de ces pions de centrage, l'invention s'applique également à toute configuration dans laquelle les moyens 3 de fixation du carter 1 avec le boîtier électrique 2 comprennent au moins un orifice d'accueil de plus que ce qu'ils comptent de pions de centrage. En d'autres termes, l'invention s'applique également, à titre d'exemple non limitatif, à tout compresseur électrique 500 dans lequel les moyens 3 de fixation du carter 1 avec le boîtier électrique 2 comportent trois orifices d'accueil angulairement agencés de telle manière que l'un de ces orifices d'accueil au moins présente respectivement, avec chacun des deux autres orifices d'accueil, un écart angulaire, mesuré par rapport à l'axe longitudinal Z du compresseur électrique 500, dans le plan de la couronne périphérique dans laquelle les orifices d'accueil sont agencés (couronne périphérique 10 du carter 1 ou couronne périphérique 20 du boîtier électrique 2), égal à l'écart angulaire mesuré entre les pions de centrage sur la couronne périphérique qui les porte. Par la coopération respective des deux pions de centrage 30a, 30b, avec l'une ou l'autre des paires d'orifices d'accueil ainsi définies, il devient également possible de réaliser deux configurations angulaires relatives différentes du carter 1 et du boîtier électrique 2 au sein du compresseur électrique 500.

Par ailleurs, l'invention s'étend également à tout compresseur électrique 500 dans lequel les moyens 3 de fixation du carter 1 avec le boîtier électrique 2, comportant deux pions de centrage 30a, 30b, comportent N ensembles de deux orifices d'accueil 31x, 31y, deux ensembles d'orifices d'accueil adjacents étant angulairement décalés entre eux d'un angle d'orientation 7, où le nombre N est égal à la valeur du rapport entre 180 degrés et la valeur de l'angle d'orientation 7. Il faut comprendre ici comme adjacents deux ensembles d'orifices d'accueil angulairement séparés par au plus un des orifices d'un troisième ensemble d'orifices d'accueil. À titre d'exemple non limitatif, l'invention s'étend ainsi également à un compresseur électrique 500 dans lequel les moyens 3 de fixation du carter 1 avec le boîtier électrique 2 comportent au moins deux pions de centrage et trois ensembles de deux orifices d'accueil angulairement décalés entre eux d'un angle d'orientation de 60 degrés.

En synthèse, l'invention concerne notamment un compresseur électrique 500 d'un fluide réfrigérant 700 pour véhicule automobile et comportant (i) un carter logeant un mécanisme de compression du fluide réfrigérant 700 et un moteur électrique 11, (ii) un boitier électrique 2 logeant un module de commande pour contrôler le moteur électrique 11 et (iii) des moyens de fixation du boitier électrique 2 sur le carter permettant de réaliser une indexation angulaire dudit boitier électrique 2 sur ledit carter 1, afin de pouvoir assembler ledit boitier électrique 2sur ledit carter 1 suivant au moins deux configurations angulaires différentes par rapport à un axe longitudinal Z du compresseur électrique 500.

## Revendications

1. Compresseur électrique (500) d'un fluide réfrigérant (700) pour véhicule automobile, le compresseur électrique (500) comprenant :
- un carter (1) qui loge un mécanisme de compression du fluide réfrigérant (700) et un moteur électrique (11) pour actionner le mécanisme de compression (10) ;
- un boîtier électrique (2) qui loge un module de commande (20) du moteur électrique (11) ;
- des moyens (3) de fixation du boîtier électrique (2) sur le carter (1) ;
**caractérisé en ce que** les moyens (3) de fixation du boîtier électrique (2) avec le carter (1) permettent d'établir au moins deux configurations angulaires différentes d'assemblage du boîtier électrique (2) sur le carter (1) et par rapport à un axe longitudinal (Z) du compresseur électrique (500),
et dans lequel les moyens de fixation (3) comprennent, pour chaque configuration angulaire du boîtier électrique (2) sur le carter (1), au moins un ensemble formé par des pions de centrage configurés pour s'engager dans des orifices d'accueil complémentaires du compresseur électrique (500).
et dans lequel les moyens de fixation (3) comprennent au moins deux pions de centrage (30a, 30b) et au moins trois orifices d'accueil (310a, 310b, 311a, 311b).

2. Compresseur électrique (500) selon la revendication précédente, dans lequel les pions de centrage (30a, 30b) sont logés dans une couronne périphérique (10) du carter (1), les orifices d'accueil (310a, 310b, 311a, 311b) étant formés dans une couronne périphérique (20) du boîtier électrique (2).

3. Compresseur électrique (500) selon la revendication précédente, dans lequel les pions de centrage (30a, 30b) sont logés dans une couronne périphérique (20) du boîtier électrique (2), les orifices d'accueil (310a, 310b, 311a, 311b) étant formés dans une couronne périphérique (10) du carter (1).

4. Compresseur électrique (500) selon l'une quelconque des revendications précédentes, dans lequel les orifices d'accueil (310a, 310b, 311a, 311b) sont angulairement régulièrement répartis sur la couronne périphérique (10, 20) dans laquelle ils sont formés et par rapport à l'axe longitudinal (Z).

5. Compresseur électrique (500) selon l'une quelconque des revendications précédentes, dans lequel les moyens de fixation (3) comprennent :
- un premier ensemble formé par les pions de centrage (30a, 30b) et deux orifices d'accueil (310a, 310b), ledit premier ensemble permettant de fixer le boîtier électrique (2) sur le carter (1) selon une première configuration angulaire ; et
- un deuxième ensemble formé par les pions de centrage (30a, 30b) et deux orifices d'accueil (311a, 311b), ledit deuxième ensemble permettant de fixer le boîtier électrique (2) sur le carter (1) selon une deuxième configuration angulaire, un angle entre les orifices d'accueil (311a, 311b) du deuxième ensemble étant égal à un angle entre les orifices d'accueil (310a, 310b) du premier ensemble, pris par rapport à l'axe longitudinal (Z).

6. Compresseur électrique (500) selon la revendication précédente, dans lequel un angle d'orientation (7) séparant les orifices d'accueil (310a, 310b) du premier ensemble des orifices d'accueil (311a, 311b) du deuxième ensemble est sensiblement égal à 120 degrés.

7. Compresseur électrique (500) selon la revendication 5, dans lequel les moyens de fixation (3) comprennent un nombre (N) d'ensembles, chaque ensemble étant formé par les pions de centrage (30a, 30b) et deux orifices d'accueil (31x, 31y), chaque ensemble permettant de fixer le boîtier électrique (2) sur le carter (1) selon une configuration angulaire spécifique, l'angle d'orientation (7) entre deux ensembles formant des configurations angulairement adjacentes étant étal au ratio de 180 degrés par N.

8. Véhicule automobile comprenant un circuit de fluide réfrigérant, dans lequel ledit fluide réfrigérant est comprimé et chauffé au moyen d'un compresseur électrique (500) selon l'une quelconque des revendications précédentes.

## Patentansprüche

1. Elektrischer Kompressor (500) eines Kältemittels (700) für ein Kraftfahrzeug, wobei der elektrische Kompressor (500) umfasst:
- ein Gehäuse (1), in dem ein Mechanismus zur Kompression des Kältemittels (700) und ein Elektromotor (11) zur Betätigung des Kompressionsmechanismus (10) untergebracht sind;
- ein Elektrogehäuse (2), in dem ein Steuerungsmodul (20) des Elektromotors (11) untergebracht ist;
- Mittel (3) zur Befestigung des Elektrogehäuses (2) am Gehäuse (1);
**dadurch gekennzeichnet, dass** die Mittel (3) zur Befestigung des Elektrogehäuses (2) am Gehäuse (1) es ermöglichen, wenigstens zwei verschiedene Winkelkonfigurationen der Anbringung des Elektrogehäuses (2) am Gehäuse (1) und in Bezug auf eine Längsachse (Z) des elektrischen Kompressors (500) herzustellen,
und wobei die Befestigungsmittel (3) für jede Winkelkonfiguration des Elektrogehäuses (2) am Gehäuse (1) wenigstens eine Anordnung umfassen, die von Zentrierbolzen gebildet wird, die dafür ausgelegt sind, in komplementäre Aufnahmeöffnungen des elektrischen Kompressors (500) einzugreifen,
und wobei die Befestigungsmittel (3) wenigstens zwei Zentrierbolzen (30a, 30b) und wenigstens drei Aufnahmeöffnungen (310a, 310b, 311a, 311b) umfassen.

2. Elektrischer Kompressor (500) nach dem vorhergehenden Anspruch, wobei die Zentrierbolzen (30a, 30b) in einem Umfangskranz (10) des Gehäuses (1) aufgenommen sind, wobei die Aufnahmeöffnungen (310a, 310b, 311a, 311b) in einem Umfangskranz (20) des Elektrogehäuses (2) ausgebildet sind.

3. Elektrischer Kompressor (500) nach dem vorhergehenden Anspruch, wobei die Zentrierbolzen (30a, 30b) in einem Umfangskranz (20) des Elektrogehäuses (2) aufgenommen sind, wobei die Aufnahmeöffnungen (310a, 310b, 311a, 311b) in einem Umfangskranz (10) des Gehäuses (1) ausgebildet sind.

4. Elektrischer Kompressor (500) nach einem der vorhergehenden Ansprüche, wobei die Aufnahmeöffnungen (310a, 310b, 311a, 311b) auf dem Umfangskranz (10, 20), in welchem sie ausgebildet sind, und in Bezug auf die Längsachse (Z) winkelmäßig gleichmäßig verteilt sind.

5. Elektrischer Kompressor (500) nach einem der vorhergehenden Ansprüche, wobei die Befestigungsmittel (3) umfassen:
- eine erste Anordnung, die von den Zentrierbolzen (30a, 30b) und zwei Aufnahmeöffnungen (310a, 310b) gebildet wird, wobei die erste Anordnung ermöglicht, das Elektrogehäuse (2) am Gehäuse (1) in einer ersten Winkelkonfiguration zu befestigen; und
- eine zweite Anordnung, die von den Zentrierbolzen (30a, 30b) und zwei Aufnahmeöffnungen (311a, 311b) gebildet wird, wobei die zweite Anordnung ermöglicht, das Elektrogehäuse (2) am Gehäuse (1) in einer zweiten Winkelkonfiguration zu befestigen, wobei ein Winkel zwischen den Aufnahmeöffnungen (311a, 311b) der zweiten Anordnung gleich einem Winkel zwischen den Aufnahmeöffnungen (310a, 310b) der ersten Anordnung ist, bezogen auf die Längsachse (Z).

6. Elektrischer Kompressor (500) nach dem vorhergehenden Anspruch, wobei ein Ausrichtungswinkel (7), der die Aufnahmeöffnungen (310a, 310b) der ersten Anordnung von den Aufnahmeöffnungen (311a, 311b) der zweiten Anordnung trennt, im Wesentlichen gleich 120 Grad ist.

7. Elektrischer Kompressor (500) nach Anspruch 5, wobei die Befestigungsmittel (3) eine Anzahl (N) von Anordnungen umfassen, wobei jede Anordnung von den Zentrierbolzen (30a, 30b) und zwei Aufnahmeöffnungen (31x, 31y) gebildet wird, wobei jede Anordnung ermöglicht, das Elektrogehäuse (2) am Gehäuse (1) in einer speziellen Winkelkonfiguration zu befestigen, wobei der Ausrichtungswinkel (7) zwischen zwei Anordnungen, die winkelmäßig benachbarte Konfigurationen bilden, gleich 180 Grad geteilt durch N ist.

8. Kraftfahrzeug, welches einen Kältemittelkreislauf umfasst, in welchem das Kältemittel mittels eines elektrischen Kompressors (500) nach einem der vorhergehenden Ansprüche komprimiert und erwärmt wird.

## Claims

1. Electric compressor (500) for a refrigerant (700) for a motor vehicle, the electric compressor (500) comprising:
- a casing (1) which houses a mechanism for compressing the refrigerant (700) and an electric motor (11) for actuating the compression mechanism (10);
- an electric housing (2) which houses a control module (20) of the electric motor (11);
- means (3) for fixing the electric housing (2) onto the casing (1);
**characterized in that** the means (3) for fixing the electric housing (2) with the casing (1) make it possible to establish at least two different angular configurations of assembly of the electric housing (2) on the casing (1) and relative to a longitudinal axis (Z) of the electric compressor (500),
and wherein the fixing means (3) comprise, for each angular configuration of the electric housing (2) on the casing (1), at least one assembly formed by centring pins configured to engage in complementary accommodating orifices of the electric compressor (500),
and wherein the fixing means (3) comprise at least two centring pins (30a, 30b) and at least three accommodating orifices (310a, 310b, 311a, 311b).

2. Electric compressor (500) according to the preceding claim, wherein the centring pins (30a, 30b) are housed in a peripheral rim (10) of the casing (1), the accommodating orifices (310a, 310b, 311a, 311b) being formed in a peripheral rim (20) of the electric housing (2) .

3. Electric compressor (500) according to the preceding claim, wherein the centring pins (30a, 30b) are housed in a peripheral rim (20) of the electric housing (2), the accommodating orifices (310a, 310b, 311a, 311b) being formed in a peripheral rim (10) of the casing (1).

4. Electric compressor (500) according to any one of the preceding claims, wherein the accommodating orifices (310a, 310b, 311a, 311b) are evenly distributed angularly on the peripheral rim (10, 20) in which they are formed and relative to the longitudinal axis (Z).

5. Electric compressor (500) according to any one of the preceding claims, wherein the fixing means (3) comprise:
- a first set formed by the centring pins (30a, 30b) and two accommodating orifices (310a, 310b), said first set making it possible to fix the electric housing (2) onto the casing (1) according to a first angular configuration; and
- a second set formed by the centring pins (30a, 30b) and two accommodating orifices (311a, 311b), said second set making it possible to fix the electric housing (2) onto the casing (1) according to a second angular configuration, an angle between the accommodating orifices (311a, 311b) of the second set being equal to an angle between the accommodating orifices (310a, 310b) of the first set, taken relative to the longitudinal axis (Z) .

6. Electric compressor (500) according to the preceding claim, wherein an angle of orientation (7) separating the accommodating orifices (310a, 310b) of the first set from the accommodating orifices (311a, 311b) of the second set is substantially equal to 120°.

7. Electric compressor (500) according to Claim 5, wherein the fixing means (3) comprise a number (N) of sets, each set being formed by the centring pins (30a, 30b) and two accommodating orifices (31x, 31y), each set making it possible to fix the electric housing (2) onto the casing (1) according to a specific angular configuration, the angle of orientation (7) between two sets forming angularly adjacent configurations that are equal to the ratio of 180° by N.

8. Motor vehicle comprising a refrigerant circuit, wherein said refrigerant is compressed and heated by means of an electric compressor (500) according to any one of the preceding claims.
